# EUROPEAN PATENT APPLICATION

(11) **EP 1 122 662 A2**
(43) Date of publication of application: **08.08.2001**
(21) Application number: 01100394.4
(22) Date of filing: 05.01.2001
(51) Int. Cl.: G06F 17/60

(54) **System and method for ordering parts of analysing system**

(30) Priority: 01.02.2000 JP 2000024059
(71) Applicant: HORIBA, LTD., Kyoto (JP)
(72) Inventor: Uemura, Takeshi, Minami-ku, Kyoto (JP)
(74) Representative: MÜLLER & HOFFMANN Patentanwälte

(57) **Abstract**

This invention provides a system (1) and a method for ordering parts of an analyzing system (2) for supplying parts including expendable supplies and equipment required for operating an analyzer apparatus (3), to a user in a reliable and rapid manner, and moreover in a lowcost.

This invention provides a system (1) for ordering parts of an analyzing system (2) comprising an analyzer apparatus (3) and a data processing apparatus (4), characterized in that the data processing apparatus (4) comprises a storage for storing at least a part number as part data of the analyzing system (2) of a user, and a communication means (7) being capable of ordering a part corresponding to a part number by transmitting the part number of the to be replaced to a data processing apparatus (8) of a supplier of the analyzing system (2).

## Description

### BACKGROUND OF THE INVENTION

### Field of the Invention

This invention relates to a system and a method for ordering parts that is used for an analyzer apparatus of an analyzing system.

### Description of the Prior Art

In recent years, an analyzer apparatus in most of analyzing systems comprises a data processor, in most analyzing systems, and management of equipment, such as remote maintenance of the analyzing system, is performed by utilizing the data processor.

The present applicant proposed a system that displays a table and/or a diagram containing analysis data, inspection results, a log of use, a stock of parts including expendable supplies and equipment, in a time series, according to a Japanese Patent Application No. 9-273941 (entitled as "Equipment Managing System in Analyzing System"), filed on September 18, 1997. According to the managing system of the application, management of equipment, which reduces an oversight or an omission of entry and make easy to manage an analyzing system, can be achieved.

If the managing system of the application is used, a user of the analyzing system ascertains the stock of parts including expendable supplies and equipment at any time. When the stock becomes a predetermined number of a part suitably selected by the user or less, the user contacts with shops or dealers, of the analyzing system, decides a name, a manufacturer, quantity of the part, and makes an order for the part to its dealer. On the other hand, the dealer decides a name, quantity and so forth of the part, and makes an order for the part to the manufacturer of the analyzing system, tracing back a goods distribution channel of the part. Finally, the manufacturer accepts an order of the part from a direct dealer, or distributor, which located directly under the manufacturer in the distribution channel. On the contrary, the manufacturer of the analyzing system deliver the part to the direct distributor, and the part is delivered to the user through the goods distribution channel.

However, in the managing system above described, since ordering of the parts is performed by way of the goods distribution channel, quite a lot of days have been required from placing an order until receiving the ordered part by the user. The charge is added by handling of an intermediate dealer that constitutes the goods distribution channel, thereby increasing of a cost of the ordered part could not be avoided.

Further, the intermediate dealer often procures the part from another goods distribution channel other than a proper goods distribution channel, by the intermediate dealer's own judgment. Thereby, the part, which is not genuine, may be assembled to the analyzing system, and sometimes may cause trouble with the analyzing system. As a result, it is required for resolving the trouble, which would not be occurred if the genuine part has been used, that the manufacturer of the analyzing system dispatches a technical expert and the technical expert spends time and exertion to repair and to perform maintenance. Therefore, this might cause a loss for both of the user and the manufacturer.

Further, on a user's side, since considerable time duration is required to receive the ordered parts, the stock of the parts must be increased and either a depository must be secure or inventory management must be sufficient.

Particularly, in case of the analyzing system, the analyzer apparatus which is customized to a special specification depending on a demand of the user's side, is often manufactured, and thereby a number of variations of the each part including expendable supplies and equipment are much increased. For example, there exist parts each requiring peculiar performance, such as heat resistance, pressure resistance and corrosion resistance, even if those parts have similar outward appearances. Consequently, it is more difficult to order the parts corresponding to the analyzing system owned by the user without mistake, and it is considered that the delivered part ordered with an incorrect part number does not conform to the analyzing system owned by the user.

The present invention is achieved under circumstances above described and the object of the invention is to provide a system and a method for ordering parts of an analyzing system for supplying parts including expendable supplies and equipment required for operating an analyzer apparatus, to a user in the reliable and rapid manner, and moreover in a lowcost.

### SUMMARY OF THE INVENTION

To solve above object, a system for ordering parts of an analyzing system according to a first aspect of the present invention the data processing apparatus comprises a storage for storing at least a part number as part data of the analyzing system of a user, and a communication means being capable of ordering a part corresponding to a part number by transmitting the part number of the part to be replaced to a data processing apparatus of a supplier of the analyzing system.

A system for ordering parts of an analyzing system according to a second aspect of the present invention is a system for ordering parts of different analyzing systems used by different users, respectively, comprising an analyzer apparatus and a corresponding data processing apparatus, respectively, which is characterized in that the data processing apparatus of each analyzing system comprises a storage for storing a user identification number and at least a part number as part data of the analyzing system used by a user, and a communication means being capable of transmitting the user identification number and the part number of the part to be replaced to a data processing apparatus of a supplier, which is constructed to be capable of accepting an order from the users by receiving the user identification number and a part number from the data processing apparatus of the user via the communication means.

According to a system for ordering parts of an analyzing system foregoing, since the user can perform ordering of part only by reading out a part number from the part data stored in storage according to a construction of the analyzing system which owned by user, and by transmitting the part number with the communication means of the data processing apparatus of the analyzing system, ordering process can be performed in rapidly. Thus, since the order is accepted by the data processing apparatus of the supplier's side, the supplier of the analyzing system can dispatch immediately the part corresponding to the order. Consequently, the time duration from placing the order until receiving the goods is remarkably reduced.

Therefore, since the user can procure each of the parts rapidly, it is not required for stocking a plenty of parts including expendable supplies and equipment, a reasonable quantity of stock of parts can be reduced, and thus management can make easy. By so doing, since an intermediate goods distribution channel can be omitted, the goods distribution channel for procuring the parts can be simplified, thus the ordered part can be procured at a low price, and therefore managing costs of the analyzing system can be reduced. Moreover, the ordered part is rapidly delivered, and thereby stopping or suspending of the analyzing system caused by luck of the part can be prevented even if an unexpected situation has been occurred.

Especially, in case of the analyzing system is used for a management of a factory and so on, for example, an occurrence of the unexpected situation such as a stop of a factory production can be prevented.

Furthermore, since it can be prevented either general-purpose parts instead of the genuine parts by decision of the intermediate dealer or general-purpose parts instead of the genuine parts for saving a cost and time by the user, a cause of the trouble of the analyzing system can be reduced. A part number as a parts data, especially, is stored on the storage of the data processing apparatus of the user's side, the genuine parts have special properties according to the types and the specifications of the analyzing system the user owned can be placed and accepted orders certainly, and thus the trouble can be avoided.

A variety of forms of the communication means can be supposed. For example, the communication means may formed with a communication modems, which connected to the data processing apparatus of the user's side and the data processing apparatus of the supplier's side respectively, and a private line. A general public line or a portable telephone line may be substituted for the private line, and also an internet may connects between the data processing apparatuses. Further, the parts may not be limited to tangible objects such as expendable supplies or equipment, but also application programs such as analyzing methods using an analyzing system, or data and analysis method for use with the analysis of the analyzing result can be used.

The data processing apparatus of the user's side may have a parts diagram for clarifying an installing position of each part and a shape of each part in a disassembled condition of the analyzer apparatus as the parts data stored in the storage and may have a function for obtaining a part number by user designating the parts diagram. In this case, user disassembles the analyzer apparatus according to a predetermined procedure with reference to the parts diagram displayed as a three-dimensional using position specifying diagram and designates a damaged part or worn part from the parts diagram in the using position specifying diagram, and thereby user can obtain the part number of the damaged part or worn part and thus can reduce a mistake.

If the analyzing system owned by the user is customized with a peculiar specification, particularly, it is difficult to specify the part number of each part constructing the analyzer apparatus even by an engineer of the manufacturer's side. Therefore, the function for obtaining each part number according to the specification on a designing period of the analyzing system by designation in the parts diagram can contribute to reduce remarkably the occurrences of mistakes in ordering parts. It is not a point of the invention according to the present application whether the data processing apparatus of the user's side automatically orders a corresponding part or user performs the ordering process using the parts number after obtaining the parts number, and therefore each of them can be selected optionally according to the requirement of the user.

The data processing apparatus of the user's side may have a number of stock of each part as the part data stored in the storage, and may make the order of the parts when the number of stock becomes under a predetermined number. In this case, user does not need to manage specially the stock of the parts, therefore a burden of the user in managing the analyzing system can be eased. Even in this case, whether the data processing apparatus of the user's side automatically orders a corresponding part or not is a designing matter optionally selectable.

The data processing apparatus of the user's side may have a function to update the parts data by way of transmitting and receiving the parts data stored in the storage, responsive to an instruction from the data processing apparatus of the supplier's side. In this case, if the part having the part number stored in the data processing apparatus of the user' side has been discontinued manufacturing by a part maker, the part number can be updated with a part number of another part compatible with the part.

Consequently, since the analyzing system are mostly used for a long time period, the part maker sometimes discontinue lines of the part during the period. In such a case, the part number is updated the part number of another part compatible with the discontinued part which is researched by the manufacturer of the analyzing system, and thereby a rapidly placing and accepting an order of the parts can be maintained.

Next, a method for ordering parts of an analyzing system according to a third aspect of the present invention is a method for ordering parts of an analyzing system which is characterized by comprising the steps of storing at least a part number as part data in a data processing apparatus provided in an analyzing system, and transmitting the part number of the part from a data processing apparatus of a user of the analyzing system to a data processing apparatus of a supplier of the analyzing system, thereby ordering the part corresponding to the part number.

A method for ordering parts of an analyzing system according to a fourth aspect of the present invention is a method for ordering parts of an analyzing system which is characterized by comprising the steps of storing a user identification number and at least a part number as part data of the analyzing system used by a user in each of the data processing apparatuses provided in corresponding analyzing systems used by different users, respectively, and receiving the user identification number and the part number from the data processing apparatus of each analyzing system at the data processing apparatus of the supplier of the analyzing system, thereby accepting the order of the part corresponding to the part number from the user corresponding to the user identification number.

### BRIEF DESCRIPTION OF THE DRAWINGS

Fig. 1 is a diagram showing a schematic view of a system for ordering part of an analyzing system according to the present invention.

Fig. 2 is a diagram for illustrating one of main parts of the system for ordering-part of the analyzing system.

Fig. 3 is a diagram for illustrating another one of main parts of the system for ordering part of the analyzing system.

Fig. 4 is a diagram showing an example of parts data stored in the analyzing system.

Fig. 5 is a diagram showing another example of the parts data stored in the analyzing system.

### DETAILED DESCRIPTION OF THE PREFERRED EMBODIMENTS

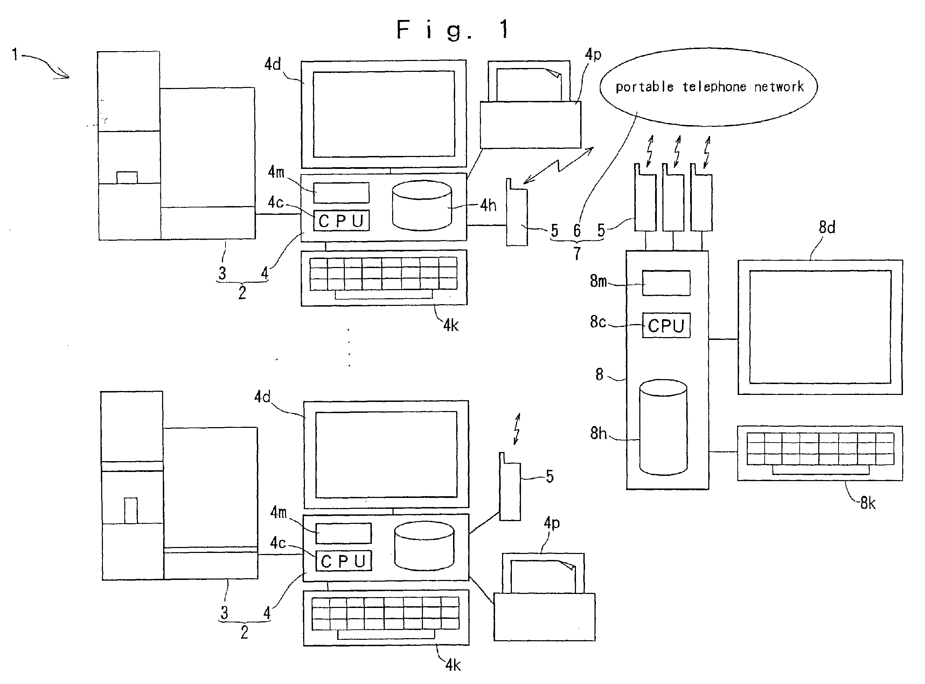

Fig. 1 is a diagram showing schematically a parts ordering system 1 of an analyzing system according to an embodiment of the present invention. Referring to Fig. 1, analyzing systems 2 comprises analyzer apparatuses 3 (each of the analyzer apparatuses 3: they have different structure respectively, but are denoted with a common reference numeral for simplifying an explanation) and data processing apparatuses consist of personal computers (hereinafter referred as personal computers) 4. The analyzer apparatus 3 performs an analysis of metals, has a detector (not shown), introduces a combustion gas caused by burning metals in an electric furnace into a measuring cell, and output a measured value detected by a infrared detector to the personal computer 4.

The personal computer 4 generally has a storage section 4h such as a hard disk drive as well as a CPU (central processing unit) 4c and a memory 4m, and is connected with an input operation section 4k such as a keyboard, a display section 4d, a printer 4p and so forth by way of interfaces (not shown). The storage section 4h is not limited to the hard disk drive, but also comprises a magneto optical disk device, a nonvolatile memory device, a server connected by a LAN (local area network), or the like.

A reference numeral 5 denotes an example of a modem installed in a personal computer 4 included in a simple portable telephone such as a personal handy-phone system. A reference numeral 6 denotes a portable telephone network of the simple portable telephone 5. The simple portable telephone 5 and the portable telephone network 6 forms a communication means 7 according to the present invention. A reference numeral 8 denotes the data processing apparatus of the supplier's side of the analyzing system 2, connected with the communication means 7. The data processing apparatus 8 comprises a storage section 8h such as a hard disk drive, an input operation section 8k such as a keyboard and display section 8d, as well as a CPU 8c and a memory section 8m.

If the simple portable telephone 5 and the portable telephone network 6 is used as the communication means 7, a communication line forming the communication means 7 can be secured in a low cost. However, the present invention does not limited to such a construction. For example, a modem, a terminal adapter and a rooter, as well as a general portable telephone for connecting with a general telephone line may be used instead of the simple portable telephone 5.

Consequently, the general telephone line, the private line or the like may be used instead of the portable telephone network 6. Additionally, the communication between the personal computer 4 and the data processing apparatus 8 can be achieved with a communication means using an Internet.

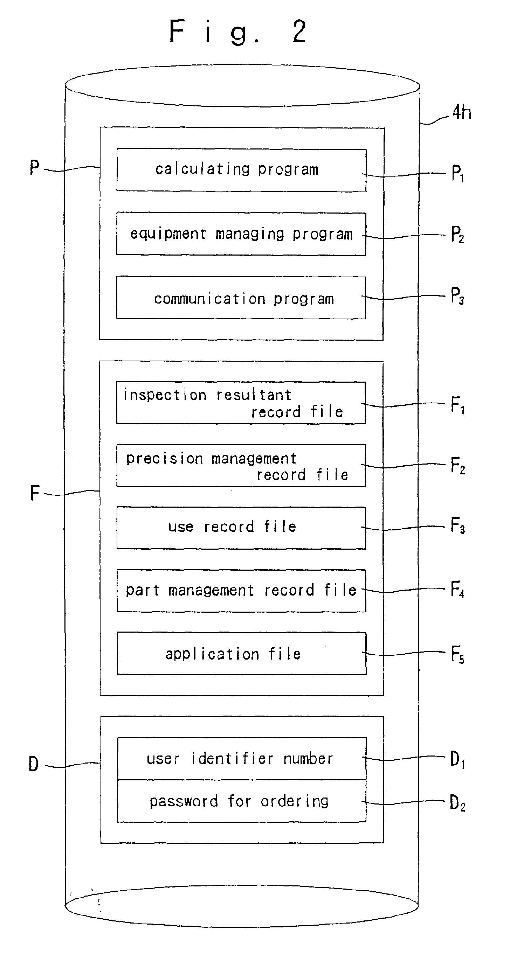

Fig. 2 is a diagram disclosing contents stored in the storage section 4h. As shown in Fig. 2, the storage section 4h stores a calculating program P₁ for calculating a measured value by the personal computer 4, an equipment managing program P₂, and a communication program P₃ for communication with the data processing apparatus 8, as programs P processed by the personal computer 4. The storage section 4h stores data D, such as a user identifier number D₁ for identifying the user of the analyzing system and a password D₂ required for ordering, in addition to a inspection resultant record file F₁, a precision management record file F₂, a use record file F₃, a part management record file F₄ and an application file F₅ such as data and method indicating analyzing method (e.g., heating pattern in case of a metal analyzer) by the analyzer apparatus 3, as a record file F.

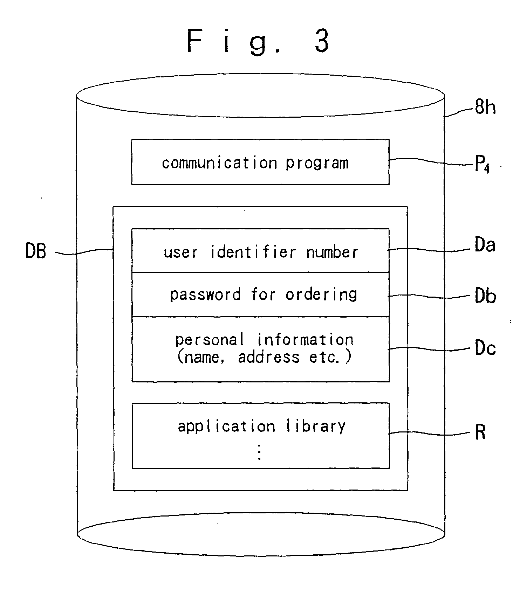

Fig. 3 is a diagram disclosing contents stored in the storage section 8h of the data processing apparatus 8 in the supplier's side of the analyzing system. As shown in Fig. 3, the storage section 8h stores a communication program P₄ processed by the data processing apparatus 8. In addition, the storage section 8h stores a user identification number Da of each analyzing system 2, a password Db for ordering, and a personal information Dc with reference to an address of the user, a method for payment and the like, as a database DB, and data Da, Db and Dc in the database DB are associated with each other. Further, the storage section 8h stores an application library R contains data and method indicating the analyzing method by the analyzer apparatus 3.

In the construction described above, the personal computer 4 shown in Fig. 1 reads the equipment managing program P₂ stored in the storage section 4h into the memory 4m and initiates it, and thereafter reads the record files F₁ - F₅ from the storage section 4h and displays the record screen or window on the display section 4d. The printer 4p is controlled by the CPU 4c so as to be able to print the record screen displayed on the display section 4d.

Next, the displayed contents of the display section 4d using the part managing record file F₄ of the record files F will be described.

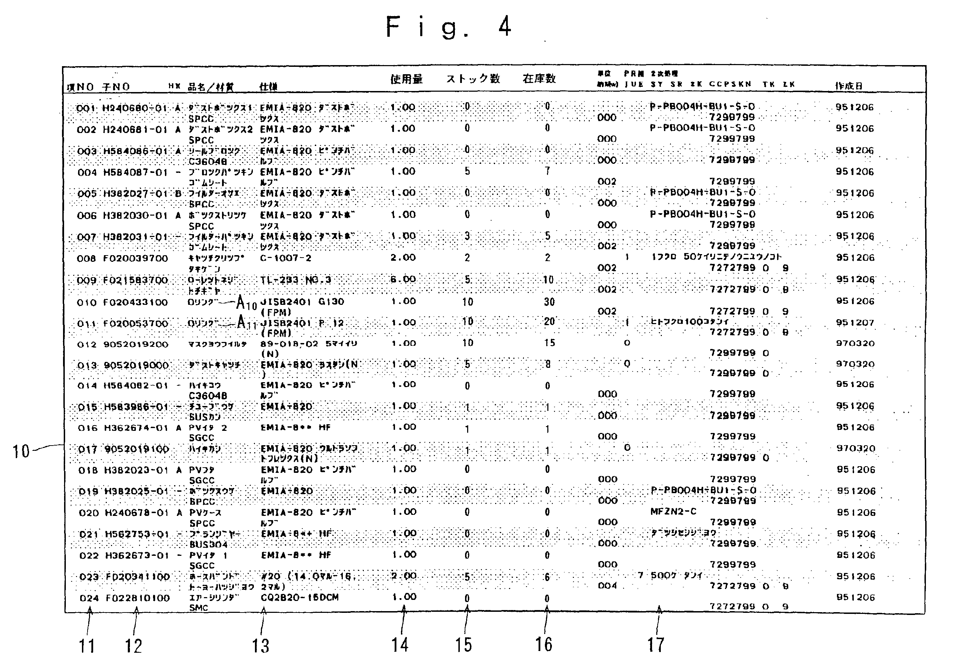

Fig. 4 is a diagram showing the part use managing screen, and part managing record table 10 developed the part managing record file F₄. In the part managing record table 10, a reference number 11, a part number 12, a part name A₁ - A₂₄, an additional information 13 such as a material and a specification, a using quantity 14, a number to be kept 15, a number of stock 16, a unit number of order 17, and so forth, of each part constructed the analyzer apparatus 3 are indicated. Hereinafter, a part of configuration of analyzer apparatus 3 is described for simplifying.

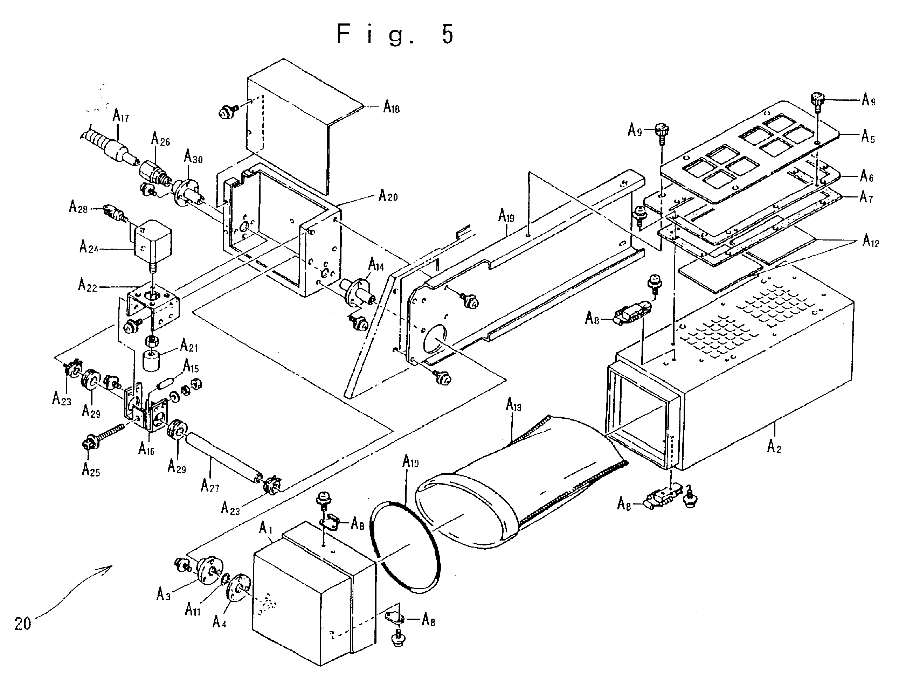

Fig. 5 shows a used portion specifying diagram 20 corresponding to the part managing record table 10, and parts diagrams A₁ - A₃₀ (for convenience, the same reference numeral as the part name of Fig. 4 is used) depicted three-dimensionally are displayed so as to clarify a fixed position and a shape of each part of a dismantled condition of the analyzer apparatus 3. This used portion specifying diagram 20 can be displayed by switching a screen when displays the part managing record table 10, for example. Consequently, the user of the analyzing system 2 can dismantle the analyzer apparatus 3 on referring the used portion specifying diagram 20 and can easily find a part diagram of a damaged part including expendable supply and equipment.

Then, by designating the part diagram corresponding to the damaged part within the used portion specifying diagram 20 with a pointing device such as a mouse or a keyboard 4k, a correct part number can be obtained. This obtaining of the part number is performed with inverting or flickering of the characters in a corresponding line in the part managing record table 10 by designating a part diagram.

Assuming an example, an 0-ring A₁₁ in the used portion specifying diagram 20 is degraded and the leak is broken out. In this case, user displays the used portion specifying diagram 20 of Fig. 5 on the display section 4d of the personal computer 4, removes a dust box A₁ and a seal block A₃ on referring the display, and picks out the 0-ring A₁₁ which is damaged. Thus, by designating the part diagram A₁₁ corresponding to the 0-ring from the used portion specifying diagram 20, the part managing record table 10 is displayed on the display section 4d, and the user can confirm the pert number 12, the using quantity 14, the number to be kept 15, the number of stock 16, and the unit number of order 17.

The user obtains the part number 12, and thereby the correct 0-ring A₁₁ can be picked out within a large number of kinds of parts that are stocked without mistake and then can fix this at a predetermined position corresponding to the used portion specifying diagram 20.

Next, the user decrease the number of the stock 16 in the part managing record table 10 by the number used, and if the number of the stock 16 become less than the number to be kept 15 the personal computer 4 outputs a message which urges to order the 0-ring A₁₁. Then, the user instructs ordering the part by a one touch operation by only pressing a order button (or by a some key input operation), for example. When user instructs ordering the part, preferably, the order only from the specific part stock manager can be available, by requesting the input of the password D₂ on ordering and order can be effective only when the inputted password is coincide with the password previously recorded on the storage section 4h shown in Fig. 2.

When the ordering is instructed by the user, the personal computer 4 reads out the part number 12 and the unit number of order 17 from the part managing record table 10, attaches the user identification number D₁ and the ordering password D₂, and create a transmission data to the data processing apparatus 8 of the supplier's side based on the corresponding numbers of parts of the part number 12 and the unit number of order 17. Then, the personal computer 4 initiates the communication program P₃ and transmits the transmission data to the data processing apparatus 8 of the supplier's side by way of the communication means 7.

On the other hand, the data processing apparatus 8 collates the user identification number D₁ and the ordering password D₂ received by the communication program P₄ with the user identification number Da and the ordering password Db, respectively, and thereby only when these are coincide with each other, the data processing apparatus 8 accepts the order from the user's side. Thus, the user's name, ordered date and ordered time can record in the log by reading out a detail information such as a shipping address of the ordered part from the personal information of the user Dc using the database DB. Then, the data processing apparatus 8 performs the dispatch procedure for dispatching directly to the user the parts of the received part number 12 by the number corresponding to the unit number of orders 17.

The dispatch procedure of the parts may be performed automatically so that the data processing apparatus prints automatically the invoice, the statement of delivery and the like using the printer connected with the data processing apparatus 8 when the data processing apparatus 8 accepts the order by receiving the transmitted data from the user's side. Preferably, the dispatch procedure can be performed under supervision of the person in charge of accepting the order. Further, such as the confirmation of the telephone number of the caller may be added the condition of accepting the order in consideration with a security.

The part managing record table 10 is displayed in time series, omitting to illustrate in figure, so that such as the fluctuation of the number of stock of each part can be confirmed. That is, by displaying the fluctuation of the number of stock in time series, the frequency of part ordering can be monitored, and thereby the unit number of orders 17 can be adjusted suitably not to occurring the out of stock upon securing the storing space of the stock.

According to the present invention, since there is no goods distribution channel intervening from the time of the ordering the part at the user's side until the time of the receiving of the ordered part, not only the time required for until delivery of the parts is shortened and rapidly devising can be achieved, but also providing the parts in a low cost is available because of without adding the intermediate charge on the price of the goods. Therefore the number of keeping on user's side can be reduced and the management of the stock can be easier.

The part managing record table 10 for indicating the parts number and the number of stock and the used portion specifying diagram 20 consisting of the part diagram which clarifies the fixed portion and the shape of the part as the part data of each of the parts in the storage section 4h of the personal computer 4 provided in the analyzer apparatus 3. Therefore, ordering of the part certainly corresponding to the analyzer apparatus 3 owned by the user even if the analyzer apparatus 3 is designed of a specialized specification customized partially.

In the embodiment of the above description, since an example of ordering can be performed by the user is disclosed, but the present invention does not limited to this. For example, upon receiving the request from the user's side, a serviceman of the manufacturer's side can browsing the apparatus history F₁ - F₄ (see Fig. 2) recorded on the analyzing system 2 of the user's side in time series, through the communication means 7 from the data processing apparatus 8 of the manufacturer's side, and can perform a suitable maintenance by deciding the condition of the analyzing system 2. In this situation, the serviceman of the manufacturer's side can pointed out the part which is insufficient and then the order can be accept by receiving the parts number.

It is preferable in special that the contents of the part management record file F₄ of the part data recorded on the storage section 4h is transmitted and received in response to the instruction from the data processing apparatus 8 of the supplier's side, and thus the part data can be update. In this case, the supplier of the analyzing system can be updated the part number 12 to the newest data, the part number of the part which discontinued lines of the manufacturer can be replaced with another part number of the other part compatible with the part of the old part number. The manufacturer of the analyzing system can most suitably decide the compatibility of the part, and thus an occurrence of the trouble can be restrained. In case of the analyzing system 2 which has the long period of the durability, especially, during the period of using the analyzing system 2, the part used in the system 2 may discontinued, in such a case this function is important.

Of course, the data processing apparatus 8 of the supplier's side stores a conversion table for converting the part number of the old part to the part number of the compatible new part, thereby the order of the part accepted in the old part number is replaced with the part with the new part number, and the part corresponding to the new part number can be dispatched.

In the embodiment described above, an example of ordering a tangible object as a part is disclosed, but the present invention is not limited this. Therefore, in case of the metal analyzer apparatus 3, the personal computer 4 of the user's side may orders an application such as a heating pattern for extracting a specific component in the metal, and data for using to analyze a gas generated by the burning, to the data processing apparatus 8 of the manufacturer's side. In case of the analyzer apparatus 3 is such as a gas analyzer, such as absorption property on a wavelength of the specific material can be an application.

In this case, the data processing apparatus 8 which accept the order sends a designated application in the application library R stored in the storage section 8h of the data processing apparatus 8 to the user as the application file, thereby such a part can be dispatched. On the other hand, at the user's side the received application file is kept in the storage section 4h and suitably provided for use. The manufacturer's side of each of the analyzing systems 2 produces the application files capable of using for analyzing a variety of material by using one after another at any time. The user can always analyze under the best environment by virtue of registering the application files onto the application library.

In the above described embodiment, an example of forming the analyzing system 2 by combining the analyzer apparatus 3 and the data processing apparatus 4 individually provided, however the present invention does not limited thus, of course. That is, the present invention can also apply for an analyzing system unified the data processing apparatus with the analyzer apparatus.

As described hereinbefore, according to the present invention, since the user can order a required part only by retrieving the part number among the part data stored in the storage section in accordance with the analyzing system owned and sending the part number by way of the communication means of the data processing apparatus of the analyzing system, the process for placing the order can perform rapidly. Since the order is accepted by the data processing apparatus of supplier's side, the supplier of the analyzing system can dispatch directly the ordered part to the user. Consequently, the time duration between ordering and receiving of the goods are substantially shortened.

Further, since the user can procure parts rapidly, the keeping quantity of the parts including expendable supplies and equipment can be reduced and thus stocking and managing of the parts become easier. Since the intermediate goods distribution channel is omitted, the goods distribution is simplified, thus the ordered parts can procure at a low cost, and a managing cost of the analyzing system can be reduced. Additionally, since the rapid delivery of goods can be achieved, stopping of the analyzing system caused by luck of parts can be prevented even if the unexpected situation is occurred. In case that the analyzing system is utilized for managing the factory especially, occurrence of an unforeseen accident such as a stopping of factory production, can be avoided.

In addition, since it is prevented that the general-purpose parts other than the genuine parts are utilized based on the decision of the intermediate dealer and the general-purpose parts other than the genuine parts are utilized for saving a cost and a time, factors of the trouble of the analyzing system can be reduced. Since the part number as the part data is stored in the storage section of the data processing apparatus on the user's side, a genuine part having a characteristic corresponding to a type and a specification of the analyzing system owned by the user can be ordered certainly, thus occurring of troubles can be avoided.

In case that the data processing apparatus of the user's side has a parts diagram for clarifying an installing position of each part and a shape of each part in a disassembled condition of the analyzer apparatus as the parts data stored in the storage and has a function for obtaining a part number by user designating the parts diagram, user disassembles the analyzer apparatus and designates a damaged part or worn part from the parts diagram in the using position specifying diagram, and thereby user can obtain the part number of the damaged part or worn part and thus can reduce a mistake. If the analyzing system owned by the user is customized with a peculiar specification, the function for obtaining each part number according to the specification on a designing period of the analyzing system by designation in the parts diagram can contribute to reduce remarkably the occurrences of mistakes in ordering parts.

In case that the data processing apparatus of the user's side has a number of stock of each part as the part data stored in the storage, and makes the order of the parts when the number of stock becomes less than a predetermined number, user does not need to manage specially the stock of the parts, therefore a burden of the user in managing the analyzing system can be eased.

In case that the data processing apparatus of the user's side has a function to update the parts data by way of transmitting and receiving the parts data stored in the storage, responsive to an instruction from the data processing apparatus of the supplier's side, even if the part having the part number stored in the data processing apparatus of the user' side has been discontinued manufacturing by a part maker, the part number can be updated with a part number of another part compatible with the part correctly, and a safe genuine part can be supplied.

## Claims

1. A system (1) for ordering parts of an analyzing system (2) comprising an analyzer apparatus (3) and a data processing apparatus (4), **characterized in that** the data processing apparatus (4) comprises a storage for storing at least a part number as part data of the analyzing system (2) of a user, and a communication means (7) being capable of ordering a part corresponding to a part number by transmitting the part number of the part to be replaced to a data processing apparatus (8) of a supplier of the analyzing system (2).

2. A system (1) for ordering parts of different analyzing systems (2) used by different users, respectively, comprising an analyzer apparatus (3) and a corresponding data processing apparatus (4), respectively, **characterized in that** the data processing apparatus (4) of each analyzing system (2) comprises a storage for storing a user identification number and at least a part number as part data of the analyzing system (2) used by a user, and a communication means (7) being capable of transmitting the user identification number and the part number of the part to be replaced to a data processing apparatus (8) of a supplier, which is constructed to be capable of accepting an order from the users by receiving the user identification number and a part number from the data processing apparatus (4) of the user via the communication means (7).

3. A system (1) for ordering parts of an analyzing systems (2) as claimed in claim 1 or 2, **characterized in that** the data processing apparatus (4) of the user has a parts diagram stored in the storage as parts data for clarifying an installing position of each part and a shape of each part in a disassembled condition of the analyzer apparatus (3) and has a function for obtaining a part number when a user designates a part of the parts diagram.

4. A system (1) for ordering parts of an analyzing system (2) according to anyone of the claims 1 to 3 **characterized in that** the part data stored in the storage of the data processing apparatus (4) of the user has a number of stock of each part, wherein the data processing apparatus (4) makes the order of the parts when the corresponding numbers of stock become lower than a respective predetermined number.

5. A system (1) for ordering parts of an analyzing system (2) according to anyone of the claims 1 to 4, **characterized in that** the data processing apparatus (4) of the user has a function to update the parts data by way of transmitting and receiving the parts data stored in the storage, responsive to an instruction from the data processing apparatus (8) of the supplier.

6. A method for ordering parts of an analyzing system (2) **characterized by** comprising the steps of storing at least a part number as part data in a data processing apparatus (4) provided in an analyzing system (2), and transmitting the part number of the part from a data processing apparatus (4) of a user of the analyzing system (2) to a data processing apparatus (8) of a supplier of the analyzing system (2), thereby ordering the part corresponding to the part number.

7. A method for ordering parts of an analyzing system (2) **characterized by** comprising the steps of storing a user identification number and at least a part number as part data of the analyzing system (2) used by a user in each of the data processing apparatuses (4) provided in corresponding analyzing systems (2) used by different users, respectively, and receiving the user identification number and the part number from the data processing apparatus (4) of each analyzing system (2) at the data processing apparatus (8) of the supplier of the analyzing system (2), thereby accepting the order of the part corresponding to the part number from the user corresponding to the user identification number.

8. A method for ordering parts of an analyzing system (2) as claimed in claim 6 or 7, **characterized in that** the data processing apparatus (4) of the user displays a parts diagram for clarifying an installing position of each part and a shape of each part in a disassembled condition of the analyzer apparatus (3) as the parts data on the display section (4d), wherein, if a user designates a part of the parts diagram on the display section (4d), the corresponding parts number linked to the designated part of the parts diagram is designated, and then the part is ordered.

9. A method for ordering parts of an analyzing system (2) according to anyone of the claims 6 to 8, **characterized in that** the data processing apparatus (4d) of the user displays a number of stock of each part as the part data on the display section, and makes the order of a part when a corresponding number of stock becomes lower than a respective predetermined number.

10. A method for ordering parts of an analyzing system (2) according to anyone of the claims 6 to 9, **characterized in that** the data processing apparatus (4) of the user updates the parts data by way of transmitting and receiving the parts data, responsive to an instruction from the data processing apparatus (8) of the supplier.
